Europäisches Patentamt

(19) European Patent Office

Office européen des brevets

(11) Publication number: **0 090 500**
**B1**

(12) **EUROPEAN PATENT SPECIFICATION**

(45) Date of publication of patent specification: **07.01.87**      (51) Int. Cl.⁴: **B 60 T 13/46**

(21) Application number: **83301042.4**

(22) Date of filing: **28.02.83**

(54) **Direct-acting vacuum servo.**

(30) Priority: **09.03.82 GB 8206874**

(43) Date of publication of application:
**05.10.83 Bulletin 83/40**

(45) Publication of the grant of the patent:
**07.01.87 Bulletin 87/02**

(84) Designated Contracting States:
**DE FR GB IT**

(56) References cited:
**DE-A-2 918 907**
**GB-A-2 031 086**
**GB-A-2 036 901**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Ericson, Anthony Henwood**
**27 Beverly Road**
**Leamington Spa Warwickshire CV32 6PH (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

## Description

This invention relates to direct-acting vacuum servos.

A known vacuum servo has a valve body moulded in a plastics material and has one set of integrally moulded passages to provide connections between a reservoir or front chamber (which is connected to vacuum) and a variable pressure or rear chamber and another set of passages between the rear chamber and atmosphere. The valve body of the known servo can be difficult and expensive to manufacture since radial and angled core dies are usually required to form the passages.

In particular it is already known from GB—A—2031086 to provide a direct-acting vacuum servo, particularly brake servo, of the kind comprising a casing, a movable wall in the casing, a reservoir or front chamber in the casing on one side of the movable wall for permanent connection to a vacuum source, a variable pressure or rear chamber in the casing on the other side of the movable wall and a valve mechanism which controls the admission of air between atmosphere and the rear chamber and between the rear chamber and the front chamber, the valve mechanism comprising a valve body which is connected to or forms part of the movable wall and incorporates at least one transfer passage for inter-connecting the front chamber and the rear chamber, a valve member which is slidable in the valve body and can transmit a load from an input rod to a reaction device for transmitting load from the movable wall to an output rod, at least one inlet passage for connecting the rear chamber to atmosphere, and a valve seat which is slidable relative to the valve member to selectively block and open the inlet and transfer passage in response to relative movement between the valve member and the valve body.

An object of the present invention is to provide a vacuum servo with a new valve arrangement which enables components of the servo to be manufactured in a simpler and less expensive way.

In accordance with the present invention there is provided a direct-acting vacuum servo of the kind described above in which the valve member incorporates the axially extending inlet passage and the transfer passage extends axially through an axial projection on the valve body which projection itself extends axially through the inlet passage of the valve member such that inlet and transfer ports formed at one end of the inlet and transfer passage respectively occupy discrete sectors within an annular area covered by the valve seat.

In manufacturing the valve body of the servo according to the invention, the transfer passages can be formed axially using the main dies, as also can be the inlet passages in the valve member.

One embodiment of the invention will now be described with reference to the accompanying drawings, in which:—

Figure 1 is a section on line I—I of figure 2 showing a direct-acting vacuum servo according to the invention; and

Figure 2 is a cross-section on line II—II of figure 1 showing certain components only.

Referring to the drawings, the servo includes a casing formed by a front pressing 11 and a rear pressing 12 which are clamped together using a known crimping technique to grip a diaphragm 13 at its outer peripheral bead 14. The diaphragm 13, a valve body 15, and a diaphram support plate 16 form a movable wall. An inner peripheral bead 17 of the diaphragm 13 is retained in a groove formed by the valve body 15 and a retainer 18. The valve body 15 and retainer 18 are moulded in thermoplastics and these parts may be assembled as a push fit or secured by adhesive, solvent welding or ultrasonic welding.

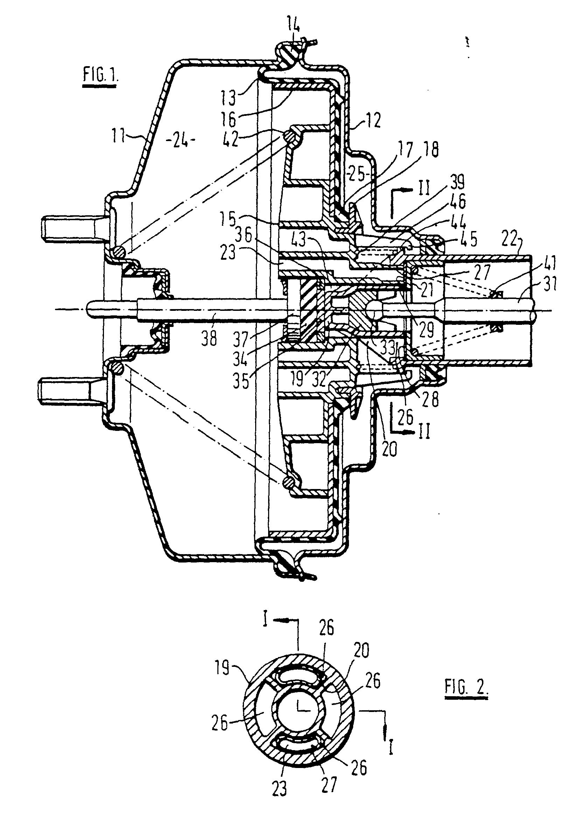

The valve body 15 forms part of a valve mechanism which also includes a valve member 19 which is slidable in the valve body 15 and valve seat 21 which is slidable in a tubular extension 22 of the valve member 19. The tubular extension 22 is united with the main part of the valve member by webs 20. Transfer passages 23 are moulded into the valve body 15 for connecting a reservoir or front chamber 24 to a variable-pressure or rear chamber 25 and inlet passages 26 are moulded into the valve member 19 for connecting the rear chamber 26 to atmosphere through the tubular extension 22 (see Figure 2).

The transfer passages 23 extend through projections 27 on the valve body 15 and these projections themselves extend axially through two of the four inlet passages 26 in the valve member 19. These two inlet passages are almost completely filled by the projections and so, apart from a small leakage area, do not act as inlet passages as such. Inlet and transfer ports 28 and 29 are formed at one end of the inlet and transfer passages 26 and 23 respectively. As can be seen most readily from figure 2, the end portions of the passages 23 and 26, and thus the ports 28 and 29, occupy discrete sectors within an annular area covered by the valve seat 21. The axial orientation of the passages, made possible by this arrangement of the ports, simplifies the tools required to mould the valve member and the valve body and also simplifies the moulding operation. The valve seat is faced with rubber to enhance sealing but, because it is arranged so that it can completely close off the ports 28 and 29, does not require any form of sliding seal or diaphragm to seal against the tubular extension 22.

The valve member 19 is connected to an input rod 31 by means of a socket member 32 which is snapfitted onto a ball head 33 before insertion into a bore in the valve body 15. The wall of the socket member 32 is slotted to provide resilience and its open end has an external lip which engages in a groove in the bore of the valve body 15 to retain the socket member in the bore.

When installed in the braking system of a motor vehicle, the input rod 31 can transmit a load from a driver's brake pedal to the rubber block 34 of a reaction device through a disc 35. The rubber block 34 can also receive a load from the valve body 15 through a washer 36 which engages in a recess in the valve body 15, the sum of the loads from the input rod 31 and the valve body being transmitted by the rubber block 34 to a disc 37 which is formed as a head on an output rod 38. In use, the output rod 38 would apply its load to a hydraulic master cylinder.

The servo is shown in figure 1 with the valve mechanism in the lap position, that is with the valve seat 21 blocking both ports 28 and 29. In this position the input rod 31 has advanced the valve member 19 against a compression valve spring 39 which acts between the valve body 15 and the valve member 19. This lap position corresponds to a steady state with an input load on rod 31 and a proportionate pressure differential load from the movable wall, both acting on the output rod 38 through the reaction device. In the no-load condition the valve spring 39 biasses the valve member 19 into a retracted position to the right of the position shown in which the valve seat 21 is lifted off the ends of tubular extensions 27 and so opens communication between the chambers 24 and 25 through the transfer passages 23 and transfer ports 29 at the ends of the projections 27. Valve seat 21 then rests on the inlet ports 28 under the action of a compression pushrod return spring 41 which bears on the input rod 31, blocking the inlet passages 26 from atmosphere. The front chamber 24, when the servo is installed as described, is connected to a source of vacuum so that in the retracted position both chambers 24 and 25 are at a reduced pressure. A compression diaphragm return spring 42 urges the valve body 15 away from the front pressing 11 such that the diaphragm 13 abuts the rear pressing 12. The diaphragm return spring 42 has to balance the pressure loading caused by the difference in sectional area presented to atmosphere by the output rod 38 and the tubular extension 22 and is of greater preload than the valve spring 39. The pushrod return spring 41 has a lesser preload than the valve spring 39.

In the retracted position, the valve member 19 is spaced from the disc 35 which is constrained to abut the rubber block by ribs 43 in the bore of the valve body. The retracted position is set by inter-engaging abutment means comprising a flange 44 on the valve member 19 and pegs 45 formed at the end of fingers 46 which project axially from the valve body 15. The pegs 45 have inclined radially inner faces and the fingers 46 are resilient to allow the pegs 45 to latch over the flange 44 during assembly.

After moving forward from the retracted position described into the lap position shown in figure 1, the valve member 19 continues to move towards the output rod. Corresponding movement of the valve seat 21 is prevented by abutment against the transfer ports 29 so the inlet ports 28 are moved away from the valve seat 21 and allow air from atmosphere into the rear chamber 25. During this opening of the inlet ports there is only just perceptible movement of disc 35 to compress the rubber block 34. However, on allowing air into chamber 25, there is a pressure differential across the diaphragm 13 resulting in a servo thrust load applied by valve body 15 through washer 36 to exert a load on the rubber block 34. The discs 35 and 37 and the washer 36 act as piston areas on an effectively hydraulic medium so that the input loads on disc 35 and servo load on washer 36 are apportioned according to the area of disc 35 and the annular area of washer. When the servo load on washer 36 balances the input load on disc 35, the valve body 15 moves forward to the same extent as the initial movement of the valve member 19, again closing off both ports 28 and 29 to re-establish the lap position. In this way, a servo load proportional to the inlet load in a ratio determined by the relative areas of washer 36 and disc 35 is applied to the output rod 38 in addition to the direct application of input load to the output rod. Since disc 35 and washer 36 are small components, their relative areas and thicknesses can be selected to suit a particular vehicle installation without changing the tooling required for the valve body 15 or valve member 19.

**Claims**

1. A direct-acting vacuum servo, particularly brake servo, comprising a casing (11, 12), a movable wall (13, 15, 16) in the casing, a reservoir or front chamber (24) in the casing on one side of the movable wall for permanent connection to a vacuum source, a variable pressure or rear chamber (25) in the casing on the other side of the movable wall and a valve mechanism (15, 19, 21) which controls the admission of air between atmosphere and the rear chamber and between the rear chamber and the front chamber, the valve mechanism comprising a valve body (15) which is connected to or forms part of the movable wall and incorporates at least one transfer passage (23) for interconnecting the front chamber and the rear chamber, a valve member (19) which is slidable in the valve body (15) and can transmit a load from an input rod (31) to a reaction device (34, 35, 36, 37) for transmitting load from the movable wall to an output rod (38), at least one inlet passage (26) for connecting the rear chamber to atmosphere, and a valve seat (21) which is slidable relative to the valve member to selectively block and open the inlet and transfer passage (26 and 23) in response to relative movement between the valve member (19) and the valve body (15), characterised in that the valve member (19) incorporates the axially extending inlet passage (26) and that the transfer passage (23) extends axially through an axial projection (27) on the valve body (15) which projection itself extends axially through the inlet passage (26) of the valve member (19) such that inlet and transfer ports (28 and 29) formed at one end of the inlet and transfer passage (26 and 23) respectively occupy discrete sectors within an annular area covered by the valve seat (21).

2. A servo according to claim 1, characterised by provision of two circumferentially spaced transfer ports (29) and two inlet ports (28) interposed between the transfer ports.

3. A servo according to claim 1 or claim 2, characterised in that the valve member (19) has a tubular extension (22) which is slidable in the servo casing (12) and closes the rear chamber (25) to atmosphere.

4. A servo according to claim 1 or claim 2 or claim 3, characterised in that a valve spring (39) acts between the valve body (15) and the valve member (19) to bias the valve member into a retracted position in which the valve seat (21) rests on the inlet ports (28) and the transfer ports (29) are open.

5. A servo according to claim 4, characterised in that the valve body (15) and valve member (19) incorporate inter-engaging abutment means (45, 44) which together limit the movement of the valve member to set said retracted position and which latch together during assembly.

6. A servo according to any preceding claim, characterised in that the reaction device (34 to 37) comprises a rubber block (34) bounded on one side by a first piston area (piston 37) on the output rod (38) and on the opposite side by an annular piston area connected to the valve body (15) and a second piston area (disc 35) connected to the valve member (19) and surrounded by the annular piston area, the annular piston area being on a washer (36) which engages in a recess in the valve body (15).

7. A servo according to claim 6, characterised in that the second piston area connected to the valve member (19) is on a disc (35) which is slidable within the washer (36) and is movable towards the rubber block (34) by the valve member (19).

8. A servo according to claim 7, characterised in that the valve body (15) provides an abutment (43) for the disc (35) to limit movement away from the rubber block (34).

**Revendications**

1. Servo-dispositif à dépression à action directe, en particulier, un servofrein, du genre qui comprend un boîtier (11, 12), une paroi mobile (13, 15, 16) formée dans le boîtier, une chambre réservoir ou chambre avant (24) formée dans le boîtier, d'un côté de la paroi mobile, et destinée à être reliée en permanence à une source de dépression, une chambre à pression variable ou chambre arrière (25), formée dans le boitier, de l'autre côté de la paroi mobile, et un mécanisme de soupape (15, 19, 21) qui commande l'admission de l'air entre l'atmosphère et la chambre arrière et entre la chambre arrière et la chambre avant, le mécanisme de soupape comprenant un corps de soupape (15) qui est relié à la paroi mobile ou fait partie de la paroi mobile et qui présente au moins un passage de transfert (23) pour relier la chambre avant à la chambre arrière, un élément obturateur de soupape (19) qui peut coulisser dans le corps de soupape (15) et peut transmettre un effort d'une tige d'entrée (31) à un dispositif de réaction (34, 35, 36, 37) pour transmettre un effort de la paroi mobile à une tige de sortie (38), au moins un passage d'entrée (26) destiné à relier la chambre arrière à l'atmosphere et un siège de soupape (21) qui peut coulisser par rapport à l'élément obturateur de la soupape pour fermer et ouvrir sélectivement le passage d'entrée et le passage de transfert (26, 23) en réponse à un déplacement relatif entre l'élément obturateur de la soupape (19) et le corps de la soupape (15), caractérisé en ce que l'élément obturateur (19) de la soupape comprend le passage d'entrée (26) s'étendant axialement tandis que le passage de transfert (23) s'étend axialement à travers un bossage axial (27) du corps (15) de la soupape, lequel bossage s'étend axialement à travers le passage d'entrée (26) de l'élément obturateur (19) de la soupape de telle manière que des orifices d'entrée et de transfert (28 et 29) formés respectivement à une extrémité du passage d'entrée et à une extrémité du passage de transfert (26 et 23) occupent des secteurs distincts dans une zone annulaire couverte par le siège (21) de la soupape.

2. Servo-dispositif selon le revendication 1, caractérisé par la présence de deux orifices de transfert (29) espacés sur la circonférence et de deux orifices d'entrée (28) interposés entre les orifices de transfert.

3. Servo-dispositif selon la revendication 1 ou la revendication 2, caractérisé en ce que l'élément obturateur (10) de la soupape possède un prolongement tubulaire (22) qui peut coulisser dans le boîtier (12) du servo-dispositif et qui isole la chambre arrière (25) de l'atmosphère.

4. Servo-dispositif selon la revendication 1 ou la revendication 2 ou la revendication 3, caractérisé en ce qu'un ressort de soupape (39) agit entre le corps (15) de la soupape et l'élément obturateur (19) de la soupape pour tendre à placer l'élément obturateur dans une position rétractée dans laquelle le siège (21) de la soupape s'appuie sur les orifices d'entrée (28) et où les orifices de transfert (29) sont ouverts.

5. Servo-dispositif selon la revendication 4, caractérisé en ce que le corps (15) de la soupape et l'élément obturateur (19) de la soupape comprennent des moyens de butée (45, 44) qui coopèrent entre eux et qui, ensemble, limitent le mouvement de l'élément obturateur de la soupape pour définir ladite position rétractée, et qui se verrouillent les uns sur les autres pendant l'assemblage.

6. Servo-dispositif selon l'une quelconque des revendications précédentes, caractérisé en ce que le dispositif de réaction (34 à 37) comprend un bloc de caoutchouc (34) limité d'un côté par une première aire de surface de piston (piston 37) formé sur la tige de sortie (38) et, de l'autre côté, par une aire de face de piston annulaire reliée au corps (15) de la soupape et une deuxième aire de face de piston (disque 35) reliée à l'élément obturateur (19) de la soupape et entouré par l'aire de face de piston annulaire, l'aire de face de piston annulaire se trouvant sur une rondelle (36) qui est engagée dans un évidement formé dans le corps (15) de la soupape.

7. Servo-dispositif selon la revendication 6, caractérisé en ce que la deuxième aire de face de piston reliée à l'élément obturateur (19) de la soupape se trouve sur un disque (35) qui peut coulisser dans la rondelle (36) et peut être déplacée vers le bloc de caoutchouc (34) par l'élément obturateur (19) de la soupape.

8. Servo-dispositif selon la revendication 7, caractérisé en ce que le corps (15) et la soupape forment une butée (43) pour le disque (35), pour limiter le mouvement dans le sens qui s'éloigne du bloc de caoutchouc (34).

## Patentansprüche

1. Direkt wirkender Unterdruckverstärker, insbesondere Bremsverstärker, mit einem Gehäuse (11, 12), einer beweglichen Wand (13, 15, 16) in dem Gehäuse, einer Vorrats- oder Vorderkammer (24) in dem Gehäuse auf einer Seite der beweglichen Wand zur dauernden Verbindung mit einer Unterdruckquelle, einer Variabeldruck- oder Hinterkammer (25) in dem Gehäuse auf der anderen Seite der beweglichen Wand und einem Ventilmechanismus (15, 19, 21), der den Zustrom von Luft zwischen der Atmosphäre und der Hinterkammer und zwischen der Hinterkammer und der Vorderkammer steuert, wobei der Ventilmechanismus einen Ventilkörper (15), der mit der beweglichen Wand verbunden ist oder einen Teil von ihr bildet, und mindestens einen Überleitungsdurchgang (23) zum Verbinden der Vorderkammer mit der Hinterkammer in sich eingearbeitet hat, ein Ventilglied (19), das in dem Ventilkörper (15) verschiebbar ist und eine Kraft von einer Eingangsstange (31) auf eine Widerlagervorrichtung (34, 35, 36, 37) zum Weiterleiten der Kraft von den beweglichen Wand zu einer Ausgangsstage (38) übertragen kann, mindestens einen Einlaßdurchgang (26) zum Verbinden der Hinterkammer mit der Atmosphäre und einen Ventilsitz (21) aufweist, der gegenüber dem Ventilglied verschiebbar ist, um den Einlaß- und Überleitungsdurchgang (26 und 23) in Ansprechung auf eine Relativbewegung zwischen dem Ventilglied (19) und dem Ventilkörper (15) wahlweise zu versperren und zu öffnen, dadurch gekennzeichnet, daß das Ventilglied (19) den axial verlaufenden Einlaßdurchgang (26) in sich eingearbeitet hat und daß sich der Überleitungsdurchgang (23) axial durch einen axialen Vorsprung (27) an dem Ventilkörper (15) erstreckt, welcher Vorsprung sich selbst axial durch den Einlaßdurchgang (26) des Ventilgliedes (19) derart erstreckt, daß eine Einlaß- und eine Überleitungsöffnung (28 und 29), die an einem Ende des Einlaß- und Überleitungsdurchganges (26 und 23) gebildet sind, jeweils einzelne Sektoren innerhalb einer ringförmigen Fläche, die von dem Ventilsitz (21) bedeckt ist, besetzen.

2. Verstärker nach Anspruch 1, gekennzeichnet durch die Bereitstellung von zwei auf einem Umkreis beabstandete Überleitungsöffnungen (29) und zwei Einlaßöffnungen (28), die zwischen den Überleitungsöffnungen angeordnet sind.

3. Verstärker nach Anspruch 1 oder Anspruch 2, dadurch gekennzeichnet, daß das Ventilglied (19) eine rohrförmige Verlängerung (22) hat, die in dem Verstärkergehäuse (12) verschiebbar ist und die Hinterkammer (25) zur Atmosphäre hin verschließt.

4. Verstärker nach Anspruch 1 oder Anspruch 2 oder Anspruch 3, dadurch gekennzeichnet, daß eine Ventilfeder (39) zwischen dem Ventilkörper (15) und dem Ventilglied (19) wirkt, um das Ventilglied in eine zurückgezogen Stellung vorzuspannen, in welcher der Ventilsitz (21) auf den Einlaßöffnungen (28) ruht und die Überleitungsöffnungen (29) offen sind.

5. Verstärker nach Anspruch 4, dadurch gekennzeichnet, daß der Ventilkörper (15) und das Ventilglied (19) aneinander angreifende Anschlagmittel (45, 44) in sich eingearbeitet haben, die zusammen die Bewegung des Ventilgliedes begrenzen, um die zurückgezogene Stellung festzulegen und die sich während des Zusammenbaus miteinander verriegeln.

6. Verstärker nach irgendeinem vorhergehenden Anspruch, dadurch gekennzeichnet, daß die Widerlagervorrichtung (34 bis 37) einen Gummiblock (34) aufweist, der auf einer Seite von einer ersten Kolbenfläche (Kolben 37) an der Ausgangsstange (38) und auf der entgegengesetzten Seite von einer ringförmigen Kolbenfläche, die mit dem Ventilkörper (15) verbunden ist, und einer zweiten Kolbenfläche (Scheibe 35), die mit dem Ventilglied (19) verbunden ist und von der ringförmigen Kolbenfläche umgeben wird, begrenzt ist, wobei die ringförmige Kolbenfläche an einer Unterlagsscheibe (36) ist, die in eine Ausnehmung in dem Ventilkörper (15) eingreift.

7. Verstärker nach Anspruch 6, dadurch gekennzeichnet, daß die zweite Kolbenfläche, die mit dem Ventilglied (19) verbunden ist, an einer Scheibe (35) ist, die innerhalb der Unterlagsscheibe (36) verschiebbar und durch das Ventilglied (19) auf den Gummiblock (34) zu bewegbar ist.

8. Verstärker nach Anspruch 7, dadurch gekennzeichnet, daß der Ventilkörper (15) einen Anschlag (43) für die Scheibe (35) bereitstellt, um die Bewegung weg von dem Gummiblock (34) zu begrenzen.

FIG. 1.

FIG. 2.